# EUROPÄISCHE PATENTANMELDUNG

(11) **EP 0 955 333 A2**
(43) Veröffentlichungstag der Anmeldung: **10.11.1999**
(21) Anmeldenummer: 99108378.3
(22) Anmeldetag: 29.04.1999
(51) Int. Cl.: C08K 5/16, C08K 5/49, C08L 67/00

(54) **Flammgeschütze Polyesterformmassen**

(30) Priorität: 07.05.1998 DE 19820401
(71) Anmelder: BASF AKTIENGESELLSCHAFT, 67056 Ludwigshafen (DE)
(72) Erfinder: Klatt, Martin, Dr., 68165 Mannheim (DE); Nam, Micheal, 67063 Ludwigshafen (DE); Fisch, Herbert, Dr., 67157 Wachenheim (DE)

(57) **Zusammenfassung**

Thermoplastische Formmassen, enthaltend
A) 5 bis 96 Gew.-% eines Polyesters
B) 1 bis 30 Gew.-% einer Stickstoffverbindung ausgewählt aus der Gruppe der phosphorhaltigen Melaminverbindungen, Dicyandiamid, Benzoguanaminverbindungen, Guanidinverbindungen, Harnstoffverbindungen, Tris(hydroxyethyl)isocyanuratverbindungen, Ammoniumpolyphosphat, Allantoinverbindungen, Glycolurilverbindungen, Ammelin, Ammelid, Melem, Melon oder deren Mischungen,
C) 1 bis 30 Gew.-% mindestens eines phosphorhaltigen Flammschutzmittels,
D) 0,01 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen
E) 0 bis 60 Gew.-% weiterer Zusatzstoffe
wobei die Summe der Gewichtsprozente der Komponenten A) bis E) 100 % ergibt.

## Beschreibung

Die Erfindung betrifft thermoplastische Formmassen, enthaltend
A) 5 bis 96 Gew.-% eines Polyesters
B) 1 bis 30 Gew.-% einer Stickstoffverbindung ausgewählt aus der Gruppe der phosphorhaltigen Melaminverbindungen, Dicyan-diamid, Benzoguanaminverbindungen, Guanidinverbindungen, Harnstoffverbindungen, Tris(hydroxyethyl) isocyanuratverbindungen, Ammoniumpolyphosphat, Allantoinverbindungen, Glycolurilverbindungen, Ammelin, Ammelid, Melem, Melon oder deren Mischungen,
C) 1 bis 30 Gew.-% mindestens eines phosphorhaltigen Flammschutzmittels,
D) 0,01 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen
E) 0 bis 60 Gew.-% weiterer Zusatzstoffe
wobei die Summe der Gewichtsprozente der Komponenten A) bis E) 100 % ergibt.

Weiterhin betrifft die Erfindung die Verwendung der erfindungsgemäßen Formmassen zur Herstellung von Fasern, Folien und Formkörpern sowie die hierbei erhältlichen Formkörper jeglicher Art.

Es besteht ein zunehmendes Marktinteresse für halogenfrei flammgeschützte Polyester. Wesentliche Anforderungen an das Flammschutzmittel sind: helle Eigenfarbe, ausreichende Temperaturstabilität für die Einarbeitung in Thermoplaste, sowie dessen Wirksamkeit in verstärktem und unverstärktem Polymer (sog. Dochteffekt bei Glasfasern).

Dabei sollte der Brandtest für unverstärkte Polyester gemäß Ul 94 mit V-O bestanden werden; Für verstärkte Polyester sollte zumindest die Klassifizierung V2 und/oder der Glühdrahttest bestanden werden. Neben den halogenhaltigen Systemen kommen in Thermoplasten im Prinzip vier halogenfreie FR-Systeme zum Einsatz:
- Anorganische Flammschutzmittel, die um Wirksamkeit zu zeigen, in hohen Mengen eingesetzt werden müssen.
- Stickstoffhaltige FR-Systeme, wie Melamincyanurat, das eine eingeschränkte Wirksamkeit in Thermoplasten z.B. Polyamid zeigt. In verstärktem Polyamid ist es nur in Verbindung mit verkürzten Glasfasern wirksam. In Polyestern ist Melamincyanurat allein nicht wirksam.
- Phosphorhaltige Fr-Systeme, die in Polyestern allgemein nicht sehr wirksam sind.
- Phosphor/Stickstoff-haltige FR-Systeme, wie z.B. Ammonium-polyphosphate oder Melaminphosphate, die für Thermoplaste, die bei Temperaturen über 200°C verarbeitet werden, keine ausreichende Thermostabilität besitzen.

Aus der JP-A 03/281 652 sind Polyalkylenterephthalate bekannt, welche Melamincyanurat und Glasfasern enthalten sowie ein phosporhaltiges Flammschutzmittel. Diese Formmassen enthalten Derivate der Phosphorsäure wie Phosphorsäureester (Wertigkeitsstufe +5), welche bei thermischer Belastung zum "Ausblühen" neigen.

Diese Nachteile zeigen sich auch für die Kombination von Melamincyanurat (MC) mit Resorcinol-bis- (disphenylphosphat), welche aus der JP-A 05/070 671 bekannt ist. Weiterhin zeigen diese Formmassen bei der Verarbeitung hohe Phenolwerte und nicht ausreichende mechanische Eigenschaften. Aus der JP-A 09/157 503 sind Polyesterformmassen mit MC, Phosphorverbindungen und Schmiermitteln bekannt, welche weniger als 10 % Verstärkungsmittel enthalten. Flammschutz- und mechanische Eigenschaften derartiger Formmassen sind verbesserungsbedürftig ebenso wie Migration und Phenolbildung bei der Verarbeitung.

In der WO 97/05705 werden Kombinationen von MC mit phosphorhaltigen Verbindungen und Schmiermitteln für Polyester offenbart.

Der vorliegenden Erfindung lag daher die Aufgabe zugrunde, flammgeschützte Polyesterformmassen zur Verfügung zu stellen, welche gemäß Ul 94 eine ausreichende Klassifizierung erzielen und den Glühdrahttest bestehen. Dabei sollte der Formbelag und die Phenolemission minimiert werden, d.h. die Migration der Flammschutzmittel sollte möglichst unterbunden werden. Weiterhin sollen die mechanischen Eigenschaften weitestgehend erhalten bleiben. Darüberhinaus sollte die thermische Stabilität bei der Verarbeitung verbessert werden.

Demgemäß wurden die eingangs definierten thermoplastischen Formmassen gefunden. Bevorzugte Ausführungsformen sind den unteransprüchen zu entnehmen.

Als Komponente (A) enthalten die erfindungsgemäßen Formmassen 5 bis 96, bevorzugt 10 bis 70 und insbesondere 10 bis 60 Gew.-% eines thermoplastischen Polyesters.

Allgemein werden Polyester auf Basis von aromatischen Dicarbonsäuren und einer aliphatischen oder aromatischen Diphdroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethylanol und Neopentylglykol oder deren Mischungen bevorzugt.

Als besonders bevorzugte Polyester (A) sind Polyalkylentereph-thalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-%, 1,6 Hexandiol und/oder 5-Methyl-1,5-Pentandiol als weitere Monomereinheiten enthalten.

Die Viskositätszahl der Polyester (A) liegt im allgemeinen im Bereich von 50 bis 220, vorzugsweise von 100 bis 150 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyethylenterephtalat (PET) und Polybutylenterephthalat (PBT). Der Anteil des Polyethylenterephthalates beträgt vorzugsweise in der Mischung bis zu 50, insbesondere 10 bis 30 Gew.-%, bezogen auf 100 Gew.-% A).

Derartige erfindungsgemäße Formmassen zeigen sehr gute Flammschutzeigenschaften und bessere mechanische Eigenschaften.

Weiterhin ist es vorteilhaft PET Rezyklate (auch scrap-PET genannt) in Mischung mit Polyalkylenterephthalaten wie PBT einzusetzen.

Unter Rezyklaten versteht man im allgemeinen:
1) sog. Post Industrial Rezyklat: hierbei handelt es sich um Produktionsabfälle bei der Polykondensation oder bei der Verarbeitung z.B. Angüsse bei der Spritzgußverarbeitung, Anfahrware bei der Spritzgußverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 6 mm, vorzugsweise kleiner als 5 mm betragen sollte.

Aufgrund der hydrolytischen Spaltung von Polyestern bei der Verarbeitung (durch Feuchtigkeitssputen) empfiehlt es sich, das Rezyklat vorzutrocknen. Der Restfeuchtegehalt nach der Trocknung beträgt vorzugsweise 0,01 bis 0,7, insbesondere 0,2 bis 0,6 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel I

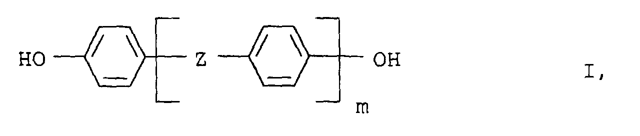

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt bis zu 90 Gew.-%, vorzugsweise bis zu 50 Gew.-%, insbesondere 10 bis 30 Gew.-% bezogen auf 100 Gew.-% der Komponente (A).

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Komponente B) enthalten die erfindungsgemäßen Formmassen 1 bis 30, vorzugsweise 1 bis 20 und insbesondere 5 bis 15 Gew.-% einer Stickstoffverbindung ausgewählt aus der Gruppe der phosphorhaltigen Melaminverbindungen, Dicyandiamid, Benzoguanaminverbindungen, Guanidinverbindungen, Harnstoffverbindungen, Tris (hydroxyethyl) -isocyanuratverbindungen, Ammoniumpolyphosphat, Allantoinverbindungen, Glycolurilverbindungen, Ammelin, Ammelid, Melem, Melon oder deren Mischungen. Geeignete Verbindungen sind

| | CAS Nr. |
|---|---|
| Melamin-phosphat prim. | 20208-95-1 |
| Melamin-phosphat sec. | 56974-60-8 |
| Melamin-pyrophosphat sec. | 15541-60-3 |
| polymeres-Melaminphosphat | 56386-64-2 |
| Guanidin-carbonat | 593-85-1 |
| Guanidin-cyanurat prim. | 70285-19-7 |
| Guanidin-phosphat prim. | 5423-22-3 |
| Guanidin-phosphat sec. | 5423-23-4 |
| Guanidin-sulfat prim. | 646-34-4 |
| Guanidin-sulfat sec. | 594-14-9 |
| Pentaerythritborsäureguanidin | N.A. |
| Neopentylglycolborsäureguanidin | N.A. |
| | |

| | CAS Nr. |
|---|---|
| Harnstoff-phosphat prim. | 4861-19-2 |
| Harnstoff-cyanurat | 57517-11-0 |
| Ammelin | 645-92-1 |
| Ammelid | 645-93-2 |
| Melem | 1502-47-2 |
| Melon | 32518-77-7 |

Weiterhin geeignet sind Ammoniumpolyphosphat (NH₄PO₃)ₙ mit n ca. 200 bis 1000, bevorzugt 600 bis 800 und Tris(hydroxyethyl)isocyanurat (THEIC) der Formel II 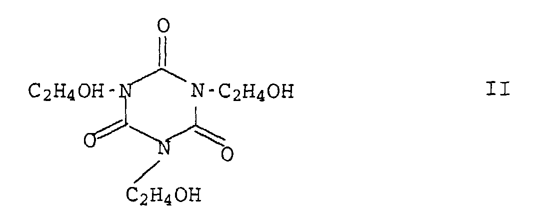 oder dessen Umsetzungsprodukte mit aromatischen Carbonsäuren Ar(COOH)ₘ, wobei Ar ein ein-, zwei- oder dreikerniges aromatisches Sechsring-System bedeutet und m 2, 3 oder 4 ist.

Geeignete Carbonsäuren sind beispielsweise Phthalsäure, Isophthalsäure, Terephtalsäure, 1,3,5-Benzoltricarbonsäure, 1,2,4-Benzolcarbonsäure, Pyromellithsäure, Mellophansäure, Prehnitsäure, 1-Naphthoesäure, 2-Naphthoesäure, Naphthalindicarbonsäuren, Anthracencarbonsäuren. Die Herstellung erfolgt durch Umsetzung des Tris(hydroxyethyl)isocyanurats mit den Säuren, ihren Alkylestern oder ihren Halogeniden gemäß den Verfahren der EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Vorzugsweise werden THEIC und/oder dessen Umsetzungsprodukte in Mischungen mit phosphorhaltigen Stickstoffverbindungen, insbesondere (NH₄PO₃)ₙ, eingesetzt. Das Mischungsverhältnis z.B. von (NH₄PO₃)ₙ zu THEIC beträgt vorzugsweise 90 bis 50 zu 50 bis 10, insbesondere 80 bis 50 : 50 bis 20 Gew.-%, bezogen auf die Mischung derartiger Komponenten B).

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden. Weiterhin geeignet sind Benzoguanamin(verbindungen) der Formel III: 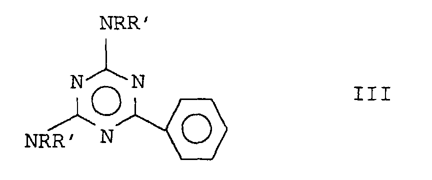 in der R, R' geradkettige oder verzweigte Alkylreste mit 1 bis 10 C-Atomen, bevorzugt Wasserstoff bedeuten. Bevorzugt sind weiterhin deren Addukte mit Phosphorsäure, Borsäure und/oder Pyrophosphorsäure. Bevorzugt sind ferner Allantoin(verbindungen) der Formel IV 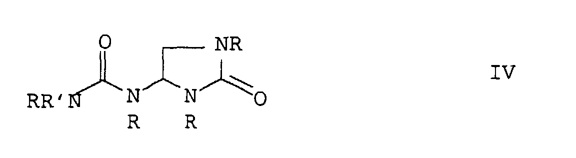 in der R', R die in Formel III genannte Bedeutung haben sowie deren Salze mit Phosphorsäure, Borsäure und/oder Pyrophosphorsäure
sowie Glycolurile der Formel V oder dessen Salze mit den o.g. Säuren 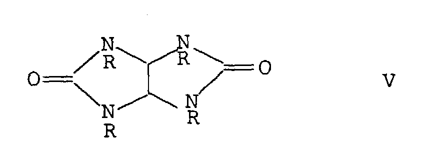 in der R die in Formel III genannte Bedeutung hat.

Geeignete Produkte sind im Handel oder gemäß DE-A 196 14 424 erhältlich.

Das gemäß der Erfindung verwendbare Cyanguanidin (Formel VI) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

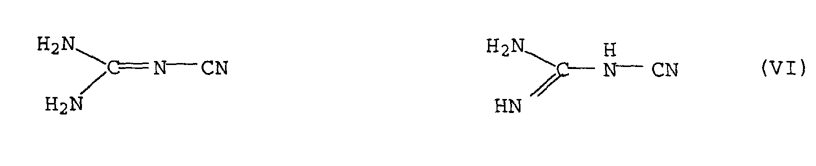

Das im Handel erhältliche Produkt ist ein weißes Pulver mit einem Schmelzpunkt von 209 bis 211°C.

Geeignete Flammschutzmittel C) sind in den erfindungsgemäßen Formmassen enthalten in Mengen von 1 bis 30, vorzugsweise 1 bis 25 und insbesondere 5 bis 15 Gew.-% bezogen auf das Gesamtgewicht der Komponenten A) bis E).

Bei der Komponente C) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A. F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetra-naphthyldiphosphin u.a.. Besonders geeignet ist Tetranaphthyldiphosphin.

Phosphorverbindungen der Wertigkeitsstufe -1 leiten sich vom Phosphinoxid ab.

Geeignet sind Phosphinoxide der allgemeinen Formel VII 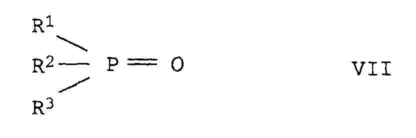 wobei R¹, R² und R³ gleiche oder verschiedene Alkyl-, Aryl-, Alkylaryl- oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenyl-phosphinoxid, Tricyclohexlyphosphinoxid, Tris-(n-octyl)-phosphinoxid und Tris-(cyanoethyl)-phosphinoxid.

Ebenso geeignet ist Triphenylphosphinsulfid und dessen wie oben beschriebene Derivate der Phosphinoxide.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite rein organischer Natur, z.B. organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol- bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie z.B. 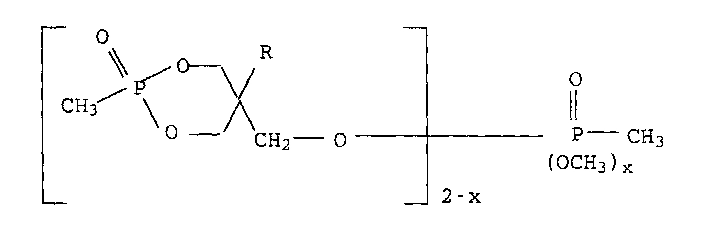 wobei R einen C₁ bis C₄-Alkylrest, bevorzugt Methylrest, x=0 oder 1 bedeutet (Amgard® P 45 der Firma Albright & Wilson).

Ferner ist Phosphor der Wertigkeitsstufe +3 in Triaryl(alkyl) phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl- bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate der allgemeinen Formel VIII (RDP): 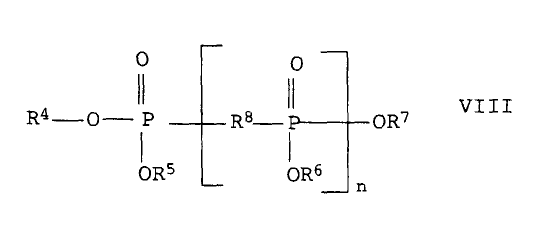 in der die Substituenten folgende Bedeutung haben:
- R⁴-R⁷: ein aromatischer Rest mit 6 bis 20 C-Atomen, bevorzugt ein Phenylrest, welcher mit Alkylgruppen mit 1 bis 4 C-Atomen bevorzugt Methyl, substituiert sein kann,
- R⁸: ein zweiwertiger Phenolrest, bevorzugt 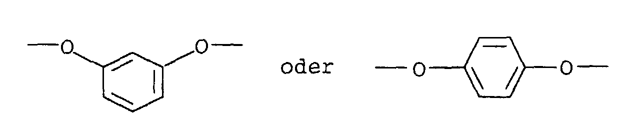
und n einen Durchschnittswert zwischen 0,1 bis 100, bevorzugt 0,5 bis 50, insbesondere 0,8 bis 10 und ganz besonders 1 bis 5.

Die im Handel erhältlichen RPD-Produkte unter dem Warenzeichen Fyroflex® oder Fyrol®-RDP (Arzo) sowie CR 733-S (Daihachi) sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie beispielsweise in der De-A 20 36 173 beschrieben ist. Das Molekulargewicht geméssen durch Dampfdruckosmometrie in Dimethylformamid, der Polyphospholinoxide soll im Bereich von 500 bis 7000, vorzugsweise im Bereich von 700 bis 2000 liegen.

Das Phosphor besitzt hierbei die Oxidationsstufe -1.

Ferner können anorganische Koordinationspolymere von Aryl(alkyl)-phosphinsäuren wie z.B. Poly-β-natrium(I)-methylphenylphosphinat eingesetzt werden. Ihre Herstellung wird in De-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbiphenol-A entstehen.

Weitere halogenfreie polymere Phosphorverbindungen, die in den erfindungsgemäßen Formmassen enthalten sein können, werden durch Reaktion von phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly (ammonium-phosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Als Komponente D) enthalten die erfindungsgemäl3en Formmassen 0,01 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Ethylendiamindistearat, Glycerinmonopalmitrat, Glycerintrilaurat, Glycerinmonobehenat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0 bis 60, insbesondere bis zu 50 Gew.-% weiterer Zusatzstoffe enthalten.

Übliche Zusatzstoffe E) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo (5.2.1.0.^{2,6})-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

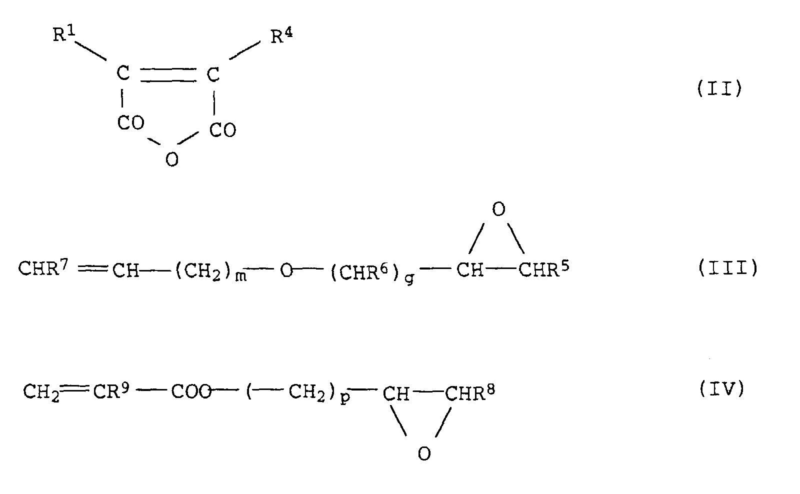

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidylmethacrylat, (Meth)acrylsäure und/oder Maleinsäureanhydrid, und
- 1 bis 45,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 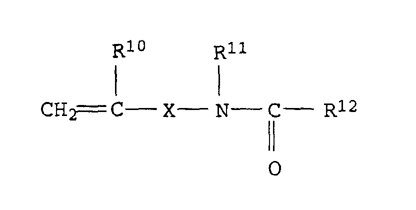 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 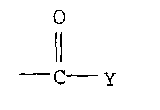
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate werden insbesondere zur Schlagzähmodifizierung von Mischungen aus PET und PBT eingesetzt. Entsprechende Blend-Produkte sind unter dem Warenzeichen Ultradur® S (ehemals Ultrablend® (BASF AG)) im Handel erhältlich. In Mischung mit Polycarbonaten sind derartige Blends unter dem Warenzeichen Terblend® der BASF AG erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere 1 bis 40 %, besonders 20 bis 35 Gew.-% eingesetzt werden.

Als bevorzugte faserförmige Füllstoffe seien Kohlenstoffasern, Armid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel:

(X-(CH₂)ₙ)ₖ-Si-(O-CₘH₂ₘ₊₁)₄₋ₖ

in der die Substituenten folgende Bedeutung haben:
- X: NH₂-, 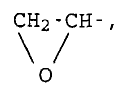 HO,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf D) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel, welche verschieden von D) sind und üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl) benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copo-lymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponenten B) bis D) sowie gegebenenfalls übliche Zusatzstoffe E) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute mechanische Eigenschaften und gute Flammschutzeigenschaften bei gleichzeitig bestandenem Glühdrahttest aus. Die Verarbeitung erfolgt weitestgehend ohne Veränderung der Polymer-matrix und der Formbelag sowie Phenolbildung wird stark reduziert. Sie eignen sich zur Herstellung von Fasern, Folien und Formkörpern, insbesondere für Anwendungen im Elektro- und Elektronikbereich. Diese Anwendungen sind insbesondere Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

### Beispiele

Komponente A/1: Polybutylenterephthalat mit einer Viskositätszahl von 130 ml/g und einem Carboxylendgruppengehalt von 34 mval/kg (Ultradur® B 4500 der BASF AG) (VZ gemessen in 0,5 gew.-%iger Lösung aus Phenol/o-Dichlorbenzol), 1:1-Mischung bei 25°C gemäß ISO 1628.
Komponente A/2:
   Polyethylenterephthalat (PET) mit einer VZ von 76 ml/g
Komponente B/1V
   Melamincyanurat
Komponente B/1
   polymeres Melaminphosphat (CAS Nr. 56386-64-2)
Komponente B/2
   Ammoniumpolyphosphat (n ≈ 700)
Komponente B/3
   oligomerer Terephthalsäureester des Tris (hydroxyethyl)isocyanurats gemäß Beispiel 3 der EP-A 584 567
Komponente C
   Resorcinolbis(diphenylphosphat) CR 733-S der Firma Daihachi
Komponente D
   Pentaerythrittetrastearat (Loxiol® VPG 861 der Firma Henkel KGaA)
Komponente E
   Schnittglasfaser mit einer Dicke von 10µm (epoxisilanisierte Schlichte)

Die Komponenten A) bis E) wurden auf einem Zweischneckenextruder bei 250 bis 260°C abgemischt, wobei Komponente D) vorab bei Raumtemperatur auf das Granulat der Komponente A) aufgetrommelt wurde, während B) und C) in die Schmelze aus A) und D) zugegeben wurden. Nach Homogenisierung wurde die Schmelze ausgetragen und in ein Wasserbad extrudiert. Nach Granulierung und Trocknung wurden auf einer Spritzgußmaschine Prüfkörper gespritzt und geprüft.

Der Brandtest erfolgte nach UL 94 an 1/16-Zoll-Prüfkörpern mit üblicher Konditionierung.

Der Glühdrahttest erfolgte an Plättchen 60/60 mm mit 1 und 3 mm Dicke. Geprüft wurde bei 960°C Drahttemperatur. Zur Untersuchung der Migration wurden Prüfstäbe gemäß ISO 179 (Schlagbiegestab) hergestellt und 4 Tage bei 140°C getempert. Danach wurde der Gewichtsverlust gemessen. Die Phenolgehalte wurden am Granulat bestimmt. Dazu wurde das Granulat in Hexafluorisopropanol gelöst, anschließend mit Methanol ausgefällt, unlösliche Anteile abfiltriert, mit Wasser auf ein definiertes Volumen aufgefüllt und der Phenolgehalt (ppm) der Lösung mittels quantitativer HPLC bestimmt.

Der E-Modul in MPa wurde nach ISO 527, die Bruchspannung in MPA nach ISO 527, und die Schlagzähigkeit in kJ/m² nach ISO 179/1eU ermittelt.

Die Zusammensetzung der Formmassen und die Ergebnisse der Messungen sind der Tabelle zu entnehmen. OR=L

| Beispiel | 1V | 2V | 3V | 4V | 1 | 2 | 3 | 5V | 6V | 7V |
|---|---|---|---|---|---|---|---|---|---|---|
| A1 | 49,7 | 44,7 | 39,7 | 29,7 | 49,7 | 49,7 | 49,7 | 50 | 50 | 50 |
| A2 | | | 10 | 20 | | | | | | |
| B/1V | 10 | 10 | 10 | 10 | | | | | | |
| B1 | | | | | 10 | | | 10 | | |
| B2 | | | | | | 10 | | | 10 | |
| B3 | | | | | | | 10 | | | 10 |
| C | 15 | 15 | 10 | 10 | 10 | 10 | 10 | 10 | 10 | 10 |
| D | 0,3 | 0,3 | 0,3 | 0,3 | 0,3 | 0,3 | 0,3 | - | - | - |
| E | 25 | 30 | 30 | 30 | 30 | 30 | 30 | 30 | 30 | 30 |
| E-Modul | 6400 | 7500 | 7800 | 8900 | 8900 | 8800 | 8600 | 7500 | 7900 | 7600 |
| Spannung | 81 | 86 | 91 | 109 | 107 | 105 | 108 | 99 | 101 | 102 |
| Schlagzähigkeit | 45 | 48 | 45 | 49 | 48 | 49 | 47 | 43 | 44 | 46 |
| UL94, 1,6 mm | V2 | V2 | V2 | V2 | V2 | V2 | V2 | V2 | V2 | V2 |
| Glühdraht 960°C 1/3 mm | +/+ | +/+ | +/+ | +/+ | +/+ | +/+ | +/+ | +/+ | +/+ | +/+ |
| Phenol [ppm] | 100 | 105 | 95 | <80 | <80 | <80 | <80 | 190 | 200 | 180 |
| Migration (%) | 0,25 | 0,25 | 0,23 | 0,23 | 0,24 | 0,23 | 0,24 | 0,37 | 0,34 | 0,35 |
| n.k.: nicht klassifziert V: Vergleichsversuch | | | | | | | | | | |

## Patentansprüche

1. Thermoplastische Formmassen, enthaltend
A) 5 bis 96 Gew.-% eines Polyesters
B) 1 bis 30 Gew.-% einer Stickstoffverbindung ausgewählt aus der Gruppe der phosphorhaltigen Melaminverbindungen, Dicyandiamid, Benzoguanaminverbindungen, Guanidinverbindungen, Harnstoffverbindungen, Tris (hydroxyethyl)isocyanuratverbindungen, Ammoniumpolyphosphat, Allantoinverbindungen, Glycolurilverbindungen, Ammelin, Aminelid, Melem, Melon oder deren Mischungen,
C) 1 bis 30 Gew.-% mindestens eines phosphorhaltigen Flammschutzmittels,
D) 0,01 bis 5 Gew.-% mindestens eines Esters oder Amids gesättigter oder ungesättigter aliphatischer Carbonsäuren mit 10 bis 40 C-Atomen mit aliphatischen gesättigten Alkoholen oder Aminen mit 2 bis 40 C-Atomen
E) 0 bis 60 Gew.-% weiterer Zusatzstoffe
wobei die Summe der Gewichtsprozente der Komponenten A) bis E) 100 % ergibt.

2. Thermoplastische Formmassen nach Anspruch 1, enthaltend als Flammschutzmittel C) mindestens ein Phosphinoxid der allgemeinen Formel VII 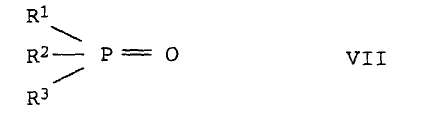 wobei R¹, R² und R³ gleiche oder verschiedenen Alkyl-, Aryl- Alkylaryl- oder Cycloalkylgruppen mit 8 bis 40 C-Atomen bedeuten.

3. Thermoplastische Formmassen nach den Ansprüchen 1 oder 2, in denen die Komponente C) aus Triphenylphospinoxid, Triphenylphosphinsulfid, Triphenylphosphat, Resorcinol-bis-(diphenylphoshat) oder Triphenylphosphin oder deren Mischungen aufgebaut ist.

4. Thermoplastische Formmassen nach den Ansprüchen 1 bis 3, enthaltend 1 bis 40 Gew.-% eines faserförmigen Füllstoffes als Komponente E).

5. Thermoplastische Formmassen nach den Ansprüchen 1 bis 4, in denen die Komponente D) Pentaerythrittetrastearat ist.

6. Thermoplastische Formmassen nach den Ansprüchen 1 bis 5, in denen die Komponente A) aus einer Mischung aus Polyethylenterephthalat und Polybutylenterephthalat besteht.

7. Thermoplastische Formmassen nach den Ansprüchen 1 bis 6, in denen die Komponente B) aus Melamin(pyro)phosphat oder einem Umsetzungsprodukt von Tris-(hydroxyethyl)isocyanurat mit einer aromatischen Carbonsäure gegebenenfalls in Mischung mit Ammoniumpolyphosphat oder deren Mischungen aufgebaut ist.

8. Verwendung der thermoplastischen Formmassen gemäß den Ansprüchen 1 bis 7, zur Herstellung von Fasern, Folien und Formkörpern.

9. Formkörper erhältlich aus den thermoplastischen Formmassen gemäß den Ansprüchen 1 bis 7.
